# FASCICULE DE BREVET EUROPEEN

(11) **EP 1 339 483 B1**
(45) Date de publication et mention de la délivrance du brevet: **04.05.2005**
(21) Numéro de dépôt: 01998396.4
(22) Date de dépôt: 07.11.2001
(51) Int. Cl.: B01J 8/12, B01J 8/08, B01J 8/00

(54) **REACTEUR DE CONVERSION CHIMIQUE D'UNE CHARGE AVEC APPORTS DE CHALEUR ET CIRCULATION CROISEE DE LA CHARGE ET D'UN CATALYSEUR**
REAKTOR ZUR CHEMISCHEN UMWANDLUNG EINES AUSGANGSMATERIALS MIT WÄRMEZUFUHR UND AUSGANGSMATERIAL/KATALYSATOR-QUERZIRKULATION
REACTOR FOR CHEMICAL CONVERSION OF A FEEDSTOCK WITH HEAT INPUTS AND FEEDSTOCK/CATALYST CROSS-CIRCULATION

(30) Priorité: 29.11.2000 FR 0015426
(43) Date de publication de la demande: 03.09.2003
(73) Titulaire: Institut Français du Pétrole, 92852 Rueil-Malmaison Cedex (FR)
(72) Inventeur: LENGLET, Eric, F-92500 Rueil-Malmaison (FR); BOUDET, Nicolas, F-69007 Lyon (FR); HOFFMANN, Frédéric, F-69110 Sainte Foy les Lyon (FR)
(86) Numéro de dépôt international: PCT/FR2001/003458
(87) Numéro de publication internationale: WO 2002/043851

(56) Documents cités:
- FR-A- 877 663
- US-A- 2 534 859
- US-A- 2 865 848
- US-A- 4 525 482
- PATENT ABSTRACTS OF JAPAN vol. 007, no. 019 (C-147), 25 janvier 1983 (1983-01-25) -& JP 57 177330 A (BABCOCK HITACHI KK), 1 novembre 1982 (1982-11-01)

## Description

Les industries chimiques, pétrolières et pétrochimiques utilisent de nombreuses réactions chimiques endothermiques, par exemple des réactions de craquage, de déshydrogénation ou de réformage d'hydrocarbures.

Certaines de ces réactions sont réversibles et limitées par un équilibre thermodynamique. Dans ce cas, le refroidissement qui se produit dans un lit catalytique du fait de l'endothermicité de la réaction conduit à une limitation de la conversion des réactifs.

Un moyen pour atteindre une conversion élevée consiste à introduire des surfaces chauffantes dans le lit catalytique, ou à utiliser une pluralité de lits catalytiques séparés par des zones de réchauffage du fluide réactionnel.

Dans de nombreux cas, en particulier pour la déshydrogénation d'hydrocarbures, le catalyseur se désactive au moins partiellement, par exemple par cokage, au cours de la réaction et doit être soutiré, en continu ou par intervalles de temps, pour son remplacement par du catalyseur neuf ou régénéré.

On connaît des procédés par exemple de réformage catalytique d'hydrocarbures où la charge réactionnelle traverse successivement une pluralité de réacteurs à lit catalytique, avec des réchauffages intermédiaires entre réacteurs, pour compenser le refroidissement du fluide réactionnel dû à l'endothermicité de la réaction. Le catalyseur circule d'un réacteur à l'autre, à co-courant d'ensemble ou contre-courant d'ensemble avec la charge avant d'être régénéré et recyclé. Ceci conduit à une bonne utilisation du catalyseur, qui est coké de façon homogène avant d'être régénéré.

L'un des objets de l'invention est un réacteur notamment pour la mise en oeuvre d'un procédé de conversion chimique à lits catalytiques avec des moyens d'apport de chaleur intégrés dans ledit réacteur, et présentant donc une grande compacité de la zone réactionnelle, combinée avec une bonne utilisation du catalyseur. Un autre objet de l'invention est un procédé de conversion d'une charge (le plus souvent une charge hydrocarbonée) subissant une réaction endothermique utilisant ledit réacteur. On ne sortirait pas du cadre de la présente invention en utilisant une série de réacteurs dont l'un au moins est conforme à la présente invention.

A cet effet, l'invention propose un réacteur pour la conversion chimique d'une charge, ledit réacteur de conversion chimique contenant entre une extrémité supérieure et une extrémité inférieure un lit catalytique sensiblement vertical, et comportant en combinaison :
- à proximité de son extrémité supérieure au moins un moyen d'introduction d'un catalyseur solide,
- des moyens d'introduction et d'évacuation de ladite charge permettant sa circulation de façon sensiblement horizontale à travers le lit catalytique,
- des moyens de chauffage de ladite charge, intégrés dans ledit réacteur,
dans lequel ledit réacteur comporte à proximité de son extrémité inférieure au moins un moyen d'extraction différenciée du catalyseur entre une partie amont et une partie aval dudit lit catalytique, relativement au sens de circulation de la charge.

Le réacteur peut être un réacteur-échangeur avec des surfaces chauffantes immergées dans le lit catalytique ; il peut aussi comprendre une pluralité de lits catalytiques séparés par des zones non catalytiques de chauffage de la charge réactionnelle. Dans chacune de ces zones, la charge réactionnelle traverse un échangeur de chaleur, alimenté par un fluide thermique.

Les fluides thermiques utilisables comprennent la vapeur d'eau sous pression, par exemple entre 0,5 MPa et 1,20 MPa de préférence entre 0,6 MPa et 1 MPa absolus bornes comprises, de l'hydrogène ou un gaz contenant de l'hydrogène comme par exemple un gaz de recyclage riche en hydrogène tel que celui utilisé dans certains procédés comme diluant de la charge réactionnelle pour la protection du catalyseur.

On peut aussi utiliser la charge elle-même non convertie, ou des liquides tels que des sels fondus ou du sodium liquide

Le moyen d'extraction différencié du catalyseur est habituellement choisi dans le groupe formé par des moyens d'extraction continus et les moyens d'extraction discontinus.

De façon préférée, le lit catalytique comprend une pluralité de zones catalytiques séparées par des zones non catalytiques de chauffage de la charge.

Selon une caractéristique préférée de l'invention, le moyen d'extraction du catalyseur le plus en amont diffère d'au moins un moyen d'extraction situé en aval, et notamment de celui situé le plus en aval, par sa plus faible capacité d'extraction (les notions d'amont et d'aval étant relatives au sens de circulation de la charge).

L'invention propose également un procédé de conversion chimique d'une charge utilisant un réacteur tel que précédemment décrit.

Typiquement, la charge est une charge d'hydrocarbures, fréquemment additionnée d'un diluant (par exemple de vapeur d'eau, d'hydrogène, d'azote, ou d'un mélange de ces gaz).

Dans un mode de réalisation particulier de l'invention, le procédé de conversion chimique est un procédé de déshydrogénation catalytique d'une charge d'hydrocarbures paraffiniques.

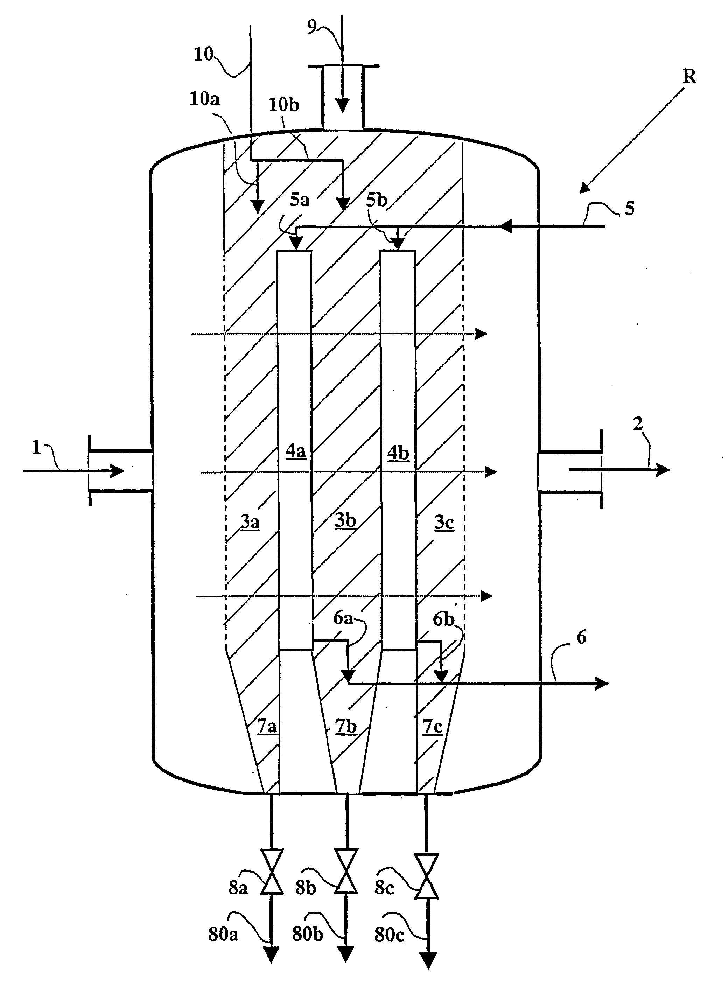

On se réfère maintenant à la figure 1 qui représente de façon non limitative un réacteur R selon l'invention utilisé pour la mise en oeuvre d'une réaction endothermique.

La charge réactionnelle est introduite dans le réacteur R par la ligne 1 ; elle traverse successivement un lit catalytique 3a, puis un échangeur de chaleur 4a, puis un second lit catalytique 3b, puis un second échangeur de chaleur 4b, puis un troisième et dernier lit catalytique 3c, avant de sortir du réacteur par la ligne 2. Le catalyseur est introduit dans le réacteur en tête de celui-ci par la ligne 9. Il se répartit dans les lits catalytiques 3a, 3b, 3c dans lesquels il circule en écoulement gravitaire descendant. Chaque lit catalytique possède une trémie séparée d'évacuation de catalyseur : 7a pour le lit 3a, 7b pour le lit 3b et 7c pour le lit 3c.

Des vannes d'extraction 8a, 8b et 8c en fond de chacun des lits catalytiques permettent d'extraire séparément du catalyseur usé circulant dans chacun des lits catalytiques en série. Le catalyseur est évacué par les lignes 80a, 80b, 80c.

Les échangeurs de la chaleur 4a et 4b sont alimentés par un fluide thermique introduit par les lignes 5, 5a et 5b, ce fluide quittant les échangeurs par les lignes 6a, 6b et 6.

En partie supérieure des lits 3a et 3b, on introduit par les lignes 10, 10a, 10b un gaz sensiblement inerte dont la fonction est de réaliser un gaz de barrage pour éviter les passages de contournement (by-pass) de la charge circulant du lit 3a vers le lit 3b, ainsi que du lit 3b vers le lit 3c, sans traverser l'échangeur 4a ou l'échangeur 4b.

Typiquement ce gaz peut être un diluant de la charge, par exemple de la vapeur d'eau ou du gaz de recyclage riche en hydrogène.

L'installation fonctionne de la façon suivante.

La charge préchauffée à la température réactionnelle traverse les trois lits (ou zones) catalytiques 3a, 3b, 3c en série, avec deux réchauffages intermédiaires.

Le catalyseur, introduit par ligne 9 est soutiré soit en continu, soit de façon discontinue par les lignes 80a, 80b, 80c.

Dans le réacteur, selon l'invention, on fait circuler, et l'on renouvelle de préférence plus rapidement le catalyseur du lit 3c que celui du lit 3a. En effet, de façon typique, le catalyseur vieillit plus rapidement et se désactive et se coke plus rapidement en fin de zone réactionnelle, c'est-à-dire dans le lit aval 3c que dans le lit amont 3a. De préférence 3c est renouvelé plus rapidement que 3b, lui-même renouvelé plus rapidement que 3a.

L'invention permet donc une bonne utilisation du catalyseur, qui est soutiré à un état de désactivation relativement constant.

Lorsque l'on fonctionne en continu, on peut utiliser les vannes 8a, 8b, 8c pour ajuster des soutirages différentiés de catalyseur.

Lorsque l'on fonctionne en discontinu, il est possible de soutirer par intervalle des quantités de catalyseur variables selon les zones du lit catalytique (débits de soutirage plus importants dans les zones aval, au sens de la circulation de la charge).

Il est également possible d'effectuer des soutirages plus fréquents de catalyseur dans la zone aval 3c que dans la zone 3b et/ou dans la zone 3b que dans la zone 3a. On peut également moduler à la fois la fréquence et les quantités de catalyseur extraites.

Enfin, il est possible de procéder à des extractions limitées de catalyseur usé (par exemple 10 % à 33 % du volume de chaque lit) ou bien d'effectuer des renouvellements de tout le volume d'un lit (ou zone) individuel : 3a, ou 3b ou 3c. Dans ce cas, on renouvellera de préférence plus fréquemment le catalyseur de la zone 3c que celui de la zone 3a

Les réacteurs selon l'invention peuvent contenir de 2 à environ 20 zones catalytiques séparées par des zones d'échange thermique.

Le fluide réactionnel peut également être introduit latéralement et circuler horizontalement, en courant croisé avec la charge.

Il est possible d'utiliser des lits de faible épaisseur, par exemple comprise entre 5 et 10 cm, ou d'épaisseur moyenne, par exemple comprise entre 10 et 80 cm, et si le procédé l'exige, des vitesses spatiales faibles ou élevées (par exemple entre 10 et 250 h⁻¹). Les températures dépendent du procédé mais sont fréquemment comprises entre 250°C et 950°C, de préférence entre environ 400 et environ 700 °C. Toutes ces valeurs ne sont pas limitatives de l'invention.

On ne sortirait pas du cadre de l'invention dans le cas où il y aurait un lit catalytique unique, ou des lits en parallèle, avec un écoulement croisé charge/catalyseur.

Le réacteur selon l'invention permet ainsi de réaliser la conversion chimique d'une charge en présence d'un catalyseur tout en apportant dans chacune des zones catalytiques la quantité de chaleur nécessaire. Il permet également d'extraire de manière différenciée le catalyseur au moins partiellement désactivé.

Le réacteur selon l'invention permet ainsi de maintenir un niveau d'activité catalytique et/ou une productivité élevées en produit recherché.

L'invention peut notamment être utilisée pour le réformage d'hydrocarbures, la déshydrogénation de l'éthylbenzène, et la déshydrogénation des paraffines telles que par exemple le propane, le n-butane, l'isobutane, les paraffines notamment linéaires ayant de 10 à 14 atomes de carbone, pour la production d'oléfines permettant de produire des alkylbenzènes, ou d'autres réactions chimiques.

## Revendications

1. Réacteur de conversion chimique, contenant entre une extrémité supérieure et une extrémité inférieure un lit catalytique sensiblement vertical, et comportant en combinaison :
- à proximité de l'extrémité supérieure dudit réacteur au moins un moyen d'introduction d'un catalyseur solide,
- des moyens d'introduction et d'évacuation d'une charge permettant sa circulation de façon sensiblement horizontale à travers le lit catalytique,
- des moyens de chauffage, de ladite charge, intégrés dans ledit réacteur,
dans lequel ledit réacteur comporte à proximité de son extrémité inférieure au moins un moyen d'extraction différenciée du catalyseur entre une partie amont et une partie aval dudit lit catalytique, relativement au sens de circulation de la charge et ledit lit catalytique comprend une pluralité de zones catalytiques séparées par des zones non catalytiques de chauffage de la charge et dans lequel le moyen d'extraction du catalyseur le plus en amont diffère du moyen d'extraction situé le plus en aval par sa plus laible capacité d'extraction.

2. Réacteur selon la revendication 1 dans lequel le moyen d'extraction différencié du catalyseur est choisi dans le groupe formé par des moyens d'extraction continus et les moyens d'extraction discontinus.

3. Procédé de conversion chimique d'une charge utilisant un réacteur comprenant entre une extrémité supérieure et une extrémité inférieure un lit catalytique sensiblement vertical, ce réacteur comportant en combinaison :
- à proximité de son extrémité supérieure au moins un moyen d'introduction d'un catalyseur solide,
- des moyens d'introduction et d'évacuation de ladite charge permettant sa circulation de façon sensiblement horizontale à travers le lit catalytique,
- des moyens de chauffage, de ladite charge, intégrés dans ledit réacteur,
ledit réacteur comportant également à proximité de son extrémité inférieure au moins un moyen d'extraction différenciée du catalyseur entre une partie amont et une partie aval dudit lit catalytique, relativement au sens de circulation de la charge, et ledit lit catalytique comprenant une pluralité de zones catalytiques séparées par des zones non catalytiques de chauffage de la charge,
dans lequel on fait circuler et l'on renouvelle plus rapidement ou plus fréquemment le catalyseur situé dans ladite partie aval du lit catalytique par rapport au catalyseur situé dans ladite partie amont.

4. Procédé de conversion chimique selon la revendication 3, dans lequel des soutirages différentiés sont effectués pour les parties aval et amont du lit catalytique, pour obtenir un état de désactivation relativement constant du catalyseur soutiré.

5. Procédé de conversion chimique selon l'une des revendications 3 et 4, dans lequel la charge est une charge d'hydrocarbures.

6. Procédé de conversion chimique selon l'une des revendications 3 à 5 dans lequel on effectue la déshydrogénation catalytique d'une charge d'hydrocarbures paraffiniques.

7. Procédé de conversion chimique selon l'une des revendications 3 à 6 dans lequel la charge est additionnée d'un diluant.

8. Procédé de conversion chimique selon l'une des revendications 3, 4, 5, 7 dans lequel on réalise le réformage d'hydrocarbures.

9. Procédé de conversion chimique selon l'une des revendications 3 à 7 dans lequel on réalise la déshydrogénation de l'éthylbenzène.

## Patentansprüche

1. Reaktor zur chemischen Umwandlung, enthaltend zwischen einem oberen Ende und einem unteren Ende ein im Wesentlichen vertikales katalytisches Bett und in Kombination umfassend:
- in der Nähe des oberen Endes des Reaktors wenigstens ein Mittel zur Einführung eines festen Katalysators,
- Mittel zum Einführen und zum Abziehen einer Beschickung, die deren Zirkulation in im Wesentlichen horizontaler Weise über das katalytische Bett ermöglichen,
- Mittel zum Heizen der Beschickung, die in den Reaktor integriert sind,
worin der Reaktor in der Nähe seines unteren Endes wenigstens ein Mittel zum differenzierten Abziehen des Katalysators zwischen einem Teil stromaufwärts und einem Teil stromabwärts des katalytischen Betts relativ zur Zirkulationsrichtung der Beschickung umfasst und das katalytische Bett eine Vielzahl von katalytischen Zonen umfasst, die durch nicht katalytische Heizzonen der Beschickung getrennt sind, und worin das Mittel zum Abziehen des Katalysators, welches am meisten stromaufwärts ist, von dem Mittel zum Abziehen, welches am meisten stromabwärts ist, durch seine geringere Abzugskapazität abweicht.

2. Reaktor nach Anspruch 1, worin das differenzierte Abzugsmittel des Katalysators gewählt ist aus der Gruppe, die gebildet wird durch Mittel zum kontinuierlichen Abziehen und Mittel zum diskontinuierlichen Abziehen.

3. Verfahren zur chemischen Umwandlung einer Beschickung, welches einen Reaktor verwendet, der zwischen einem oberen Ende und einem unteren Ende ein im Wesentlichen vertikales katalytisches Bett umfasst, wobei der Reaktor in Kombination umfasst:
- in der Nähe seines oberen Endes wenigstens ein Mittel zur Einführung eines festen Katalysators,
- Mittel zum Einführen und zum Abziehen einer Beschickung, die deren Zirkulation in im Wesentlichen horizontaler Weise über das katalytische Bett ermöglichen,
- Mittel zum Heizen der Beschickung, die in den Reaktor integriert sind,
wobei der Reaktor ebenso in der Nähe seines unteren Endes wenigstens ein Mittel zum differenzierten Abziehen des Katalysators zwischen einem Teil stromaufwärts und einem Teil stromabwärts des katalytischen Betts relativ zur Zirkulationsrichtung der Beschickung umfasst und das katalytische Bett eine Vielzahl von katalytischen Zonen umfasst, die durch nicht katalytische Heizzonen der Beschickung getrennt sind,
worin man den Katalysator, der in dem Teil stromabwärts des katalytischem Bettes angeordnet ist, zirkulieren lässt und schneller und häufiger erneuert als den in dem Teil stromaufwärts angeordneten Katalysator.

4. Verfahren zur chemischen Umwandlung nach Anspruch 3, bei dem die differenzierten Abzüge durch die Teile stromabwärts und stromaufwärts des katalytischen Betts durchgeführt werden, um einen relativ konstanten Deaktivierungszustand des abgezogenen Katalysators zu erhalten.

5. Verfahren zur chemischen Umwandlung nach einem der Ansprüche 3 und 4, in dem die Beschickung eine Kohlenwasserstoffbeschickung ist.

6. Verfahren zur chemischen Umwandlung nach einem der Ansprüche 3 bis 5, bei dem die katalytische Dehydrierung einer paraffinischen Kohlenwasserstoffbeschickung durchgeführt wird.

7. Verfahren zur chemischen Umwandlung nach einem der Ansprüche 3 bis 6, bei dem die Beschickung mit einem Verdünnungsmittel versetzt wird.

8. Verfahren zur chemischen Umwandlung nach einem der Ansprüche 3, 4, 5, 7, bei dem man das Reformieren von Kohlenwasserstoffen durchführt.

9. Verfahren zur chemischen Umwandlung nach einem der Ansprüche 3 bis 7, bei dem man die Dehydrierung von Ethylbenzol durchführt.

## Claims

1. A chemical conversion reactor, containing a substantially vertical catalytic bed between an upper end and a lower end, and comprising in combination:
• close to the upper end of said reactor, at least one means for introducing a solid catalyst;
• means for introducing and evacuating a feed allowing its flow in a substantially horizontal direction through the catalytic bed;
• means for heating said feed integrated into said reactor;
wherein :
- said reactor comprises, close to its lower end, at least one means for extraction of the catalyst, which extraction is differentiated between an upstream portion and a downstream portion of said catalytic bed, with respect to the direction of flow of said feed,
- said catalytic bed comprises a plurality of catalytic zones separated by non-catalytic zones for heating the feed,
- and in which the most upstream catalyst extraction means differs from the most downstream extraction means in its lower extraction capacity.

2. A reactor according to claim 1, in which the means for differentiated catalyst extraction is selected from the group formed by continuous and discontinuous extraction means.

3. A process for chemical conversion of a feed using a reactor comprising a substantially vertical catalytic bed between an upper end and a lower end, this reactor comprising in combination:
• close to the upper end of said reactor, at least one means for introducing a solid catalyst;
• means for introducing and evacuating said feed allowing its flow in a substantially horizontal direction through the catalytic bed;
• means for heating said feed integrated into said reactor;
wherein:
- said reactor comprises also, close to its lower end, at least one means for extraction of the catalyst, which extraction is differentiated between an upstream portion and a downstream portion of said catalytic bed, with respect to the direction of flow of said feed,
- said catalytic bed comprises a plurality of catalytic zones separated by non-catalytic zones for heating the feed,
- and in which the catalyst is circulated and renewed at a higher velocity or more frequently in said downstream portion of said catalytic bed, compared with the catalyst located in said upstream portion.

4. A chemical conversion process according to claim 3, in which said differentiated extraction is carried out, for downstream and upstream portions of the catalytic bed, so as to reach a substantially constant level of deactivation for the extracted catalyst.

5. A chemical conversion process according to one of claims 3 and 4, wherein the feed is a hydrocarbon feed.

6. A chemical conversion process according to one of claims 3 to 5, in which catalytic dehydrogenation of a paraffinic hydrocarbon feed is carried out.

7. A chemical conversion process according to one of claims 3 to 6, wherein a diluent is added to the feed.

8. A chemical conversion process according to one of claims 3, 4, 5, 7, in which hydrocarbons reforming is carried out.

9. A chemical conversion process according to one of claims 3 to 7, in which ethylbenzene dehydrogenation is carried out.
